# EUROPEAN PATENT APPLICATION

(11) **EP 3 282 330 A1**
(43) Date of publication of application: **14.02.2018**
(21) Application number: 17185227.0
(22) Date of filing: 08.08.2017
(51) Int. Cl.: G05B 19/042, B60R 22/48, G06K 19/07

(54) **DETECTION DEVICE AND DETECTION CONTROL METHOD**

(30) Priority: 10.08.2016 JP 2016157625
(71) Applicant: Kabushiki Kaisha Tokai Rika Denki Seisakusho, Ohguchi-cho Niwa-gun Aichi 480-0195 (JP)
(72) Inventor: KOSUGI, Masanori, Niwa-gun,, Aichi 480-0195 (JP)
(74) Representative: TBK

(57) **Abstract**

A detection device (3) for use with a master device (2) is provided. The detection device (3) includes an electric power source (13) that is intermittently driven to generate electric power, a detector (12) switched between a number of states by occurrence of a predetermined event or a predetermined state, an electric power accumulator (26) that is charged or discharged by switching the state of the detector (12), and a controller (10) powered by the electric power source (13). The controller (10) is configured to determine the state of the detector (12) and notify the master device (2) of detection information (Sb) corresponding to the state of the detector (12). Activation of the controller (10) powered by the electric power source (13) is followed by acknowledgment of the state of the detector (12) by the controller (10) based on a state of the electric power accumulator (26).

## Description

The present disclosure relates to a detection device configured to output, through wireless communication, detection information indicating the occurrence of a predetermined state detected by a detector.

A detection device is used as, for example, a seatbelt reminder for a vehicle (refer to Japanese Laid-Open Patent Publication No. 2005-75123). The seatbelt reminder includes a buckling detection switch located in a seatbelt buckle. Engagement of a seatbelt tongue with the seatbelt buckle activates the buckling detection switch. Disengagement of the seatbelt tongue from the seatbelt buckle deactivates the buckling detection switch. A seatbelt reminder controller is configured to visually and acoustically prompt a vehicle occupant to fasten a seatbelt when the buckling detection switch is off.

The electric power source of a conventional detection device is a battery incorporated in the detection device. The battery of the detection device often needs to be changed and is burdensome for a user. Further, a detection device controller needs to always acknowledge whether the detection switch is on or off.

It is an object of the present disclosure to provide a detection device that eliminates the need for a user to often change the battery while allowing for constant detection acknowledgement.

A first aspect of the present disclosure is a detection device for use with a master device. The detection device includes an electric power source that is intermittently driven to generate electric power, a detector switched between a number of states by occurrence of a predetermined event or a predetermined state, an electric power accumulator that is charged or discharged by switching the state of the detector, and a controller powered by the electric power source. The controller is configured to determine the state of the detector and notify the master device of detection information corresponding to the state of the detector. Activation of the controller powered by the electric power source is followed by acknowledgment of the state of the detector by the controller based on a state of the electric power accumulator.

In the first aspect of the present disclosure, the detection device includes the electric power source that is intermittently driven to generate electric power. This eliminates the need for a user to often change the battery. It is desirable that the controller be in the standby state to reduce power consumption during a period when the electric power source of the detection device does not generate electric power or during a period when the output voltage of the electric power source is less than a predetermined value. However, the detector may detect the occurrence of a predetermined state during the period when the electric power source does not generate electric power or during the period when the output voltage of the electric power source is less than the predetermined value. In this regard, in the first aspect of the present disclosure, the detection device includes the electric power accumulator that is charged or discharged by switching the state of the detector. The fact the detection unit detected the occurrence of the predetermined state while the controller was in the standby state can be acknowledged by the controller based on the state of the electric power accumulator when the controller is switched to the standby state. This allows the controller 10 to always acknowledge the occurrence of the predetermined state.

In some embodiments and implementations, the detection device includes a passive tag capable of performing wireless communication with the master device. The controller transmits the detection information to the master device via the passive tag.

This configuration allows the detection device to perform wireless communication with the master device and thus increases the degree of freedom for the location of the detection device.

In some embodiments and implementations, in the detection device, the controller operates in accordance with control information written to the passive tag by the master device through wireless communication.

This configuration allows the detection device to be operated remotely from the master device.

In some embodiments and implementations, in the detection device, the electric power source is an energy harvesting unit configured to convert environmental energy into electric power, accumulate the electric power, and supply the electric power to the controller.

This configuration eliminates the need to change the battery in the detection device.

In some embodiments and implementations, in the detection device, the energy harvesting unit is configured to convert radio waves, used to transmit the control information output by the master device, into electric power and accumulate the electric power.

This configuration allows the harvest energy unit to be charged using the radio waves that are regularly transmitted from the master device.

In some embodiments and implementations, the detection device further includes a diode that limits flow of current from the electric power accumulator to the electric power source.

This configuration limits voltage drop of the electric power accumulator and is advantageous for prolonging the time in which the voltage at the electric power accumulator is maintained at a high value.

In some embodiments and implementations, the detection device further includes a discharger that discharges the electric power accumulator after the controller completes determination of the state of the detector.

In this configuration, when the controller is switched from the standby state to the activated state, the electric power accumulator is discharged by the discharger. This avoids situations in which electric charges remain maintained by the electric power accumulator when the controller normally operates.

In some embodiments and implementations, in the detection device, the controller has a threshold voltage, and the controller compares detector voltage output from the detector with the threshold voltage to acknowledge whether the detector is on or off as the state of the detector.

In this configuration, a simple configuration that monitors the voltage output from the detector allows the switched state of the detector to be detected.

A second aspect of the present disclosure is a detection control method used when a detection device outputs detection information to a master device. The detection device includes an electric power source that is intermittently driven to generate electric power, a detector configured to switch states when detecting a predetermined event or a predetermined state, an electric power accumulator charged or discharged by switching the state of the detector, and a controller powered by the electric power source. The controller is configured to determine the state of the detector and notify the master device of detection information corresponding to the state of the detector. The detection control method includes acknowledging the state of the detector based on an electric power accumulation state of the electric power accumulator following activation of the controller being powered by the electric power source.

Other aspects and advantages of the present disclosure will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic diagram showing one embodiment of a detection device;
Fig. 2 is a timing chart when a detector detects a state when a controller is in an activated state;
Fig. 3 is a timing chart when the detector detects a state when a controller is in a standby state;
Fig. 4 is a diagram showing another example of a detection device; and
Fig. 5 is a timing chart when the detector detects a state when a controller of the other example is in the standby state.

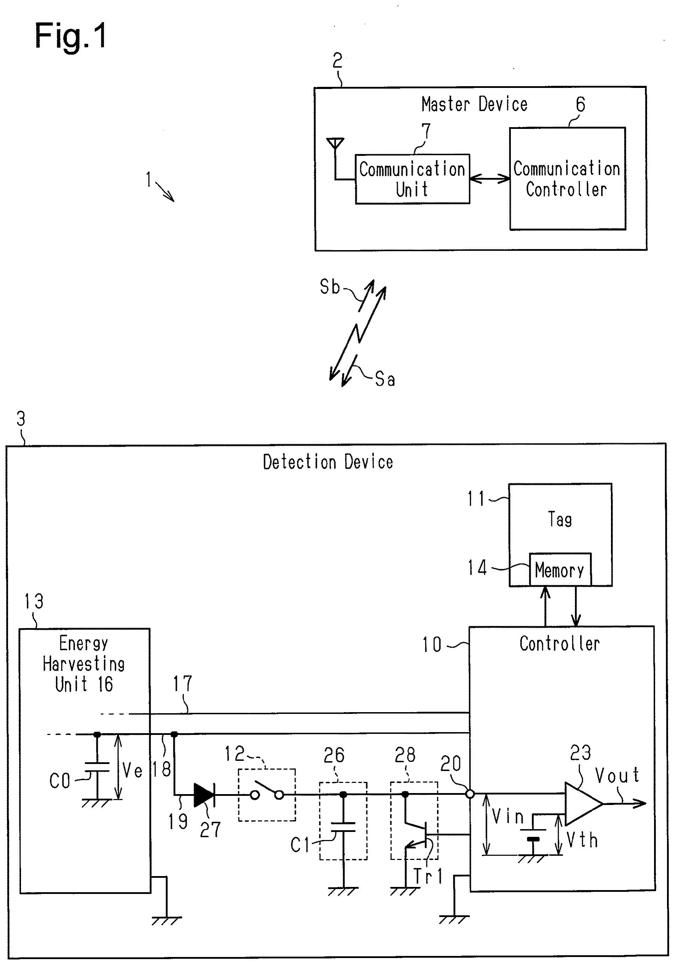

A detection device according to one embodiment will now be described with reference to Figs. 1 to 3.

Referring to Fig. 1, a detection information transmission system 1 is arranged in, for example, a vehicle. The detection information transmission system 1 includes a master device 2 and a detection device 3 serving as a slave device. The master device 2 and the detection device 3 can communicate with each other. The communication between the master device 2 and the detection device 3 may be, for example, near-field wireless communication that uses a radio frequency identification (RFID) tag. It is preferred that the radio wave frequency used for the wireless communication be, for example, a 433 MHz band, a 920 MHz band, or a 2.45 GHz band.

The master device 2 includes a communication controller 6, which may be an ECU, and a communication unit 7. The communication controller 6 controls transmission and reception of radio waves that are performed by the communication unit 7. The communication controller 6 may control various operations of the master device 2 other than communication. The communication controller 6 transmits control information Sa that controls the detection device 3 through wireless communication (RFID communication) through the communication unit 7 to the detection device 3 and receives, at the communication unit 7, detection information Sb transmitted from the detection device 3 as, for example, a reflected wave. The communication unit 7 performs communication in compliance with, for example, RFID to transmit and receive radio waves of a 433 MHz band, a 920 MHz band, or a 2.45 GHz band. The master device 2, the communication unit 7, and/or the communication controller 6 may function as an RFID reader or an RFID reader writer.

The detection device 3 includes a controller 10, a tag 11, which may be a passive tag, a detector 12 configured to detect the occurrence of a predetermine event or a predetermined state of a measured object (not shown) in a vehicle, and an electric power source 13 that is intermittently driven to generate electric power. The electric power source 13 is an electric power source for operating the controller 10. The controller 10 is configured to be powered by the electric power source 13, determine a state of the detector 12, and notify the master device 2 of a determination result corresponding to the state of the detector 12. The controller 10 is configured to access the tag 11, read data from a memory 14 of the tag 11, and write data to the memory 14. The tag 11 is a communication circuit configured to perform wireless communication with the master device 2 (communication unit 7) in compliance with, for example, an RFID communication standard.

In the present embodiment, the detector 12 is a momentary switch. The momentary switch is configured to maintain an on state only during a period when, for example, the momentary switch is operated by a user and automatically returned to an off state during a non-operation period when, for example, the momentary switch is not operated by the user. For example, when the momentary switch is on, it can indicate the occurrence of a predetermined state or a predetermined event. In another example, the detector 12 may be an alternate action switch. The alternate action switch shifts to an on state when, for example, operated by the user and maintains the on state until the alternate action switch is operated next time. The alternate action switch is switched from the on state to an off state when, for example, operated by the user and maintains the off state until the alternate action switch is operated next time. The switching of off to on of the alternate action switch can indicate, for example, the occurrence of the predetermined state or the predetermined event. The momentary switch and the alternate action switch are known in the art. Thus, the structures of the momentary switch and the alternate action switch will not be described in detail. Although no limitation is intended, the detector 12 may be a seating sensor that detects a seating event of a vehicle occupant and/or a buckling sensor that detects a buckling event of a seatbelt.

The master device 2 (communication controller 6) can transmit the control information Sa from the communication unit 7 to the tag 11 and write the control information Sa to the memory 14. The controller 10 of the detection device 3 may control various operations of the detection device 3 in accordance with the control information Sa in the memory 14 of the tag 11. The controller 10 writes the detection information Sb, which is an output of the detector 12, to the memory 14 of the tag 11 and transmits the detection information Sb in the memory 14 from the tag 11 to the master device 2 through wireless communication.

The electric power source 13 may be or include an energy harvesting unit 16 configured to convert environmental energy to electric power, accumulate the electric power, and supply the accumulated electric power to the controller 10. The controller 10 is connected to the energy harvesting unit 16 by a control line 17 and an electric power source line 18. The control line 17 transmits, to the controller 10, an enable signal that switches the controller 10 between a standby state and an activated state. The electric power source line 18 transmits, to the controller 10, electric power accumulated in the energy harvesting unit 16.

The energy harvesting unit 16 can include a capacitor C0 that accumulates electric charges generated based on environmental energy. The energy harvesting unit 16 may be configured as, for example, a dedicated IC. The energy harvesting unit 16 supplies the electric charges accumulated in the capacitor C0 as output voltage Ve through the electric power source line 18 to the controller 10 and the detector 12. The energy harvesting unit 16 is configured to convert environmental energy such as vibration, light, radio waves, or pressing of a switch into electric power and accumulate the electric power. The energy harvesting unit 16 may be configured to convert, for example, radio waves that transmit the control information Sa output by the master device 2 into electric power and accumulate the electric power.

The energy harvesting unit 16 supplies a high-level enable signal through the control line 17 to the controller 10 when the accumulated electric power (proportional to electric charges of capacitor C0) becomes greater than or equal to a desired value Wk. When the controller 10 receives the high-level enable signal from the energy harvesting unit 16 (or when enable signal shifts to high-level), the controller 10 shifts to the activated state using the output voltage Ve at the energy harvesting unit 16 as an operation electric power source.

When the accumulated electric power (proportional to electric charges of capacitor C0) becomes less than or equal to a lower limit value Wmin, the energy harvesting unit 16 shifts the enable signal to a low level. When the enable signal falls (or when high-level enable signal is not received), the controller 10 shifts to the standby state, which may be an electric power source off state. In such a manner, the controller 10 (processor or CPU or the like included in controller 10) is switched to an activated state or a standby state in accordance with the charged amount of the energy harvesting unit 16.

In the illustrated example, the detector 12 is arranged on a branching wire 19 that branches from the electric power source line 18 and connects the energy harvesting unit 16 and a control terminal 20 of the controller 10. The detector 12 may include an input terminal connected to the capacitor C0 of the energy harvesting unit 16 directly or via a diode 27 and an output terminal connected to the control terminal 20 of the controller 10. The detector 12 can include, for example, a switch that supplies the output voltage Ve at the energy harvesting unit 16 to the control terminal 20 of the controller 10 when the switch is activated.

The detection device 3 includes an electric power accumulator 26 that accumulates electric charges when the state of the detector 12 switches. An electric power accumulation state of the electric power accumulator 26 can indicate the fact that or history in which the detector 12 detected a predetermined state or a predetermined event. For example, when the controller 10 is switched to the activated state, the controller 10 can acknowledge the fact that or history in which the detector 12 detected the predetermined state or the predetermined event during a period when the controller 10 was in the standby state based on the electric power accumulation state of the electric power accumulator 26. In such a manner, the detection device 3 includes the electric power accumulator 26 connected to the detector 12 so that the state of the detector 12 is always reflected in the state or voltage at the control terminal 20 when the controller 10 is activated even in the activated state in which the controller 10 can read a state or voltage at the control terminal 20 or even in the standby state in which the controller 10 cannot read a state or voltage at the control terminal 20. In the illustrated example, the electric power accumulator 26 includes a capacitor C1. It is preferred that the capacitor C1 be connected to the detector 12 and a GND. When the detector 12 goes on, the capacitor C1 accumulates the output voltage Ve (electric charges of capacitor C0) at the energy harvesting unit 16. The activation of the controller 10 powered by the electric power source 13 is followed by the acknowledgment of the state of the detector 12 based on the state of the electric power accumulator 26.

The controller 10 includes a comparator 23 configured to detect a state of the detector 12 and changes in a state of the detector 12 based on input voltage Vin at the control terminal 20. It is preferred that the comparator 23 have a high input impedance. The comparator 23 compares the input voltage Vin at the control terminal 20 with threshold voltage Vth and outputs an output signal Vout in accordance with the comparison result. The controller 10 is configured to determine a state of the detector 12 based on the output signal Vout of the comparator 23. For example, when the input voltage Vin becomes greater than or equal to the threshold voltage Vth, the controller 10 determines that the state of the detector 12 has changed (or that detector 12 is on) so that the output signal Vout becomes, for example, high-level. When the input voltage Vin becomes less than the threshold voltage Vth, the controller 10 determines that the state of the detector 12 has not changed (or that detector 12 is off) so that the output signal Vout becomes, for example, low-level. It is preferred that the threshold voltage Vth be set to a value of approximately zero volts.

The diode 27 that prevents reverse current is located between the detector 12 and the energy harvesting unit 16. The diode 27 limits the flow of the electric charges accumulated in the capacitor C1 from the capacitor C1 into the energy harvesting unit 16. The diode 27 minimizes and prevents temporal decreases in the voltage at the capacitor C1 and maintains the voltage (input voltage Vin) at the capacitor C1.

When the controller 10 is switched from the standby state to the activated state, the comparator 23 compares the input voltage Vin, which is voltage at the capacitor C1, with the threshold voltage Vth and outputs the output signal Vout, which is the comparison result. In such a manner, the controller 10 can acknowledge whether or not the state of the detector 12 has been switched when the controller 10 is in the standby state from the voltage comparison that is made by the comparator 23 when the controller 10 is switched from the standby state to the activated state.

The detection device 3 includes a discharger 28 that discharges the electric power accumulator 26. For example, the discharger 28 is or can include a transistor Tr1. A collector terminal of the transistor Tr1 is connected to the capacitor C1, an emitter terminal of the transistor Tr1 is connected to the GND, and a base terminal of the transistor Tr1 is connected to the controller 10. The controller 10 determines a state of the detector 12 based on the output signal Vout of the comparator 23 and then discharges the capacitor C1 through the discharger 28.

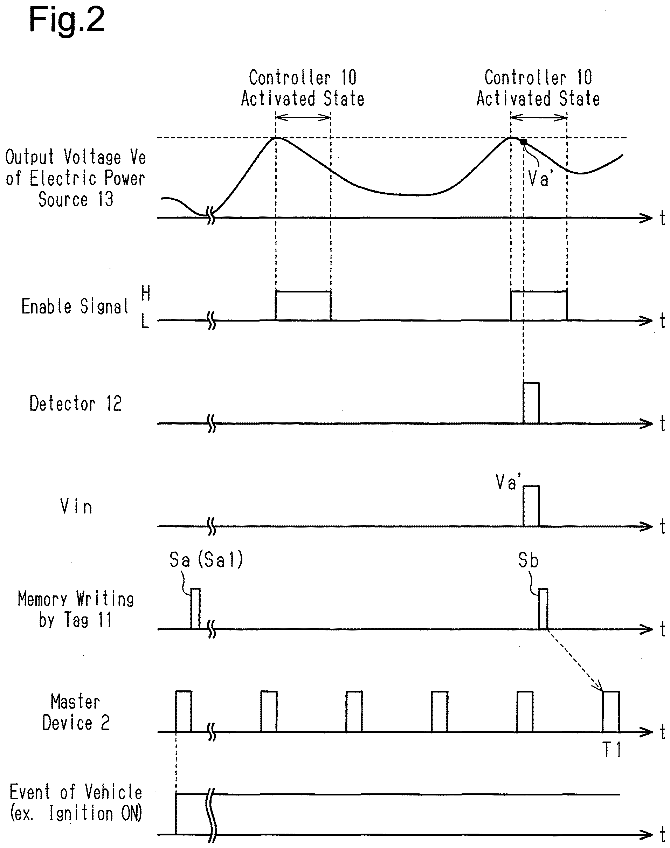

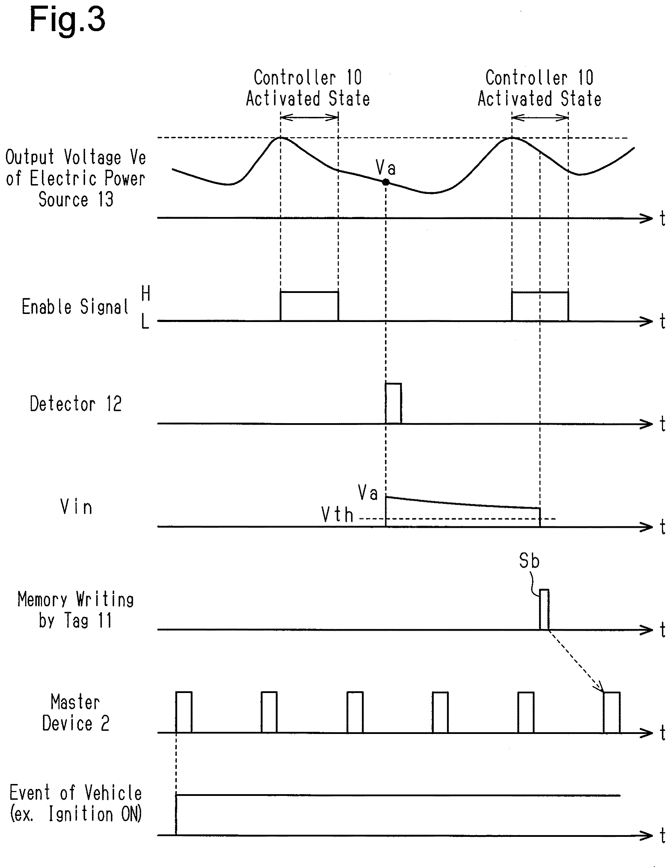

The operation and advantages of the detection device 3 will now be described with reference to Figs. 2 and 3.

As shown in Fig. 2, for example, when the master device 2 (communication controller 6) acknowledges that an ignition switch of the vehicle has been switched to the activated state, the master device 2 (communication controller 6) activates the communication unit 7 that was in the standby state and switches the near-field wireless communication (for example, RFID communication) to the on state. The activated communication unit 7 starts regular communication of the near-field wireless communication. For example, the master device 2 first transmits a monitor start request Sa1, which serves as the control information Sa, from the communication unit 7 to the tag 11 through the RFID communication. The tag 11 receives the monitor start request Sa1 and writes the monitor start request Sa1 to the memory 14.

When the capacitor C0 is charged so that the electric power based on environmental energy becomes greater than or equal to the desired value Wk, the energy harvesting unit 16 supplies a high-level enable signal through the control line 17 to the controller 10. For example, when the energy harvesting unit 16 is charged sufficiently, the output voltage Ve at the energy harvesting unit 16 activates the controller 10. In such a manner, when the controller 10 receives the high-level enable signal from the energy harvesting unit 16, the controller 10 activates the output voltage Ve at the energy harvesting unit 16 as the operation electric power source.

When the controller 10 is in the activated state, the controller 10 monitors a written state of the memory 14. Thus, when the monitor start request Sa1 is written to the memory 14, the controller 10 reads the monitor start request Sa1. The controller 10 confirms the output of the detector 12 in accordance with the read monitor start request Sa1. Based on the input voltage Vin at the control terminal 20, the controller 10 in the activated state monitors whether the state of the detector 12 has been switched. That is, the controller 10 detects the state of the detector 12 based on the output signal Vout of the comparator 23.

The output voltage Ve at the energy harvesting unit 16 gradually decreases when the controller 10 is driven. When the electric power that can be supplied by the energy harvesting unit 16 becomes less than or equal to the lower limit value Wmin, the energy harvesting unit 16 switches the enable signal from the high-level to the low-level. When the enable signal falls to the low-level, the controller 10 is switched to the standby state. In such a manner, the controller 10 repeats activation and standby in accordance with the amount of electric charges accumulated in the capacitor C0 of the energy harvesting unit 16.

If the state of the detector 12 changes (for example, switch is on) while the controller 10 is being activated, the electric power that can be supplied by the energy harvesting unit 16 remains sufficient. Thus, after the capacitor C1 accumulates electric power, sufficiently high voltage Va' is applied to the control terminal 20 (comparator 23) of the controller 10. When the controller 10 is in the activated state, the comparator 23 immediately performs voltage comparison and outputs a high-level (on signal) output signal Vout. Then, the controller 10 (for example, processor of controller 10) immediately acknowledges that the state of the detector 12 has changed. When the controller 10 acknowledges that the state of the detector 12 has changed, the controller 10 writes to the memory 14 of the tag 11 the detection information Sb indicating that the state of the detector 12 has changed. After determining the state of the detector 12, the controller 10 discharges the capacitor C1 through the discharger 28.

When the tag 11 communicates with the master device 2 at an initial communication timing T1 after the detection information Sb is written to the memory 14, the tag 11 transmits the detection information Sb, which is written to the memory 14, to the master device 2. That is, the tag 11 transmits the detection information Sb indicating that the detector 12 has been switched on to the master device 2 through the RFID communication. In such a manner, the detection device 3 uses the detection information Sb indicating that the detector 12 is on to notify the master device 2 that the detector 12 has been switched to the on state.

As shown in Fig. 3, when the controller 10 is in the standby state, the detection of the detector 12 may be switched from off to on. When the detector 12 is activated while the controller 10 is in a standby state, the capacitor C1 accumulates the remaining electric power of the energy harvesting unit 16. That is, the voltage at the capacitor C1 is accumulated in the voltage Va corresponding to the remaining electric power of the energy harvesting unit 16, and the voltage is input to the comparator 23 as the input voltage Vin.

The diode 27 is connected to the preceding stage of the detector 12. Thus, after the detector 12 is activated and the electric power of the capacitor C1 is accumulated (electric charges of capacitor C0 are moved to capacitor C1 voltage drop of the capacitor C1 no longer occurs except slow discharge such as self-discharge of the capacitor C1. Thus, the input voltage Vin at the input terminal of the comparator 23 is substantially maintained at a value when starting the electric power of the capacitor C1. When electric charges move from the capacitor C0 to the capacitor C1, the voltage at the capacitors C0 and C1 changes. However, to facilitate understanding, the capacitor C0 is set to have an amount of accumulating electric power that is greater than the capacitor C1, and voltage drop when electric charges move from the capacitor C0 to the capacitor C1 is ignored.

In this manner, the capacitor C1 maintains the input voltage Vin at the voltage Va for a relatively long time. Thus, even when the energy harvesting unit 16 performs recharging based on environmental energy so that the controller 10 is switched to the activated state again, the capacitor C1 is still not discharged, and the input voltage Vin is maintained at the voltage Va.

When the controller 10 is first activated after the detector 12 goes on, the comparator 23 compares the input voltage Vin, which is close to voltage Va, with the threshold voltage Vth. This allows the comparator 23 to output an on signal as the output signal Vout. Based on the on signal of the comparator 23, the controller 10 acknowledges that the detector 12 has been switched to the on state (or that detector 12 is in on state). The controller 10 writes to the memory 14 the detection information Sb indicating the state of the detector 12 has changed and notifies the master device 2 of the changes in the state of the detector 12 through the subsequent RFID communication. Fig. 3 does not show the communication of the monitor start request Sa1.

After detecting that the detector 12 is on, the controller 10 discharges the capacitor C1 through the discharger 28. This is because the controller 10 cannot acknowledge that the detector 12 has been operated again when the enable signal changes again to the high level again without the capacitor C1 being always discharged. Thus, after detecting that the detector 12 is on, the capacitor C1 is discharged so that the input voltage Vin becomes zero volts. This allows the controller 10 to determine whether or not the state of the detector 12 has changed whenever the enable signal is switched to the high level.

The detection device 3 of the present example includes the electric power source 13 (energy harvesting unit 16) that is intermittently driven. This eliminates the need for the user to often change the battery. During the period in which the electric power source 13 does not generate electric power, the controller 10 needs to be set to the standby state. Further, in this period, state detection of the detector 12 needs to be always detected. In this regard, the detection device 3 of the present example includes the electric power accumulator 26 that can accumulate electric power in accordance with the state of the detector 12. When the controller 10 is switched to the activated state by the electric power of the electric power accumulator 26, the controller 10 is notified that the detector 12 has performed state detection before the controller 10 switched to the activated state. This reduces non-detections during the period of the standby state.

The detection device 3 includes the passive tag 11 that is capable of performing wireless communication with the communication unit 7, which is arranged at the master device 2. The controller 10 transmits the detection information Sb through the passive tag 11 to the master device 2. The wireless communication performed between the master device 2 and the detection device 3 increases the degree of freedom for the location of the detection device 3.

The controller 10 operates in accordance with the control information Sa written to the tag 11 by the master device 2 through wireless communication. Thus, the detection device 3 can be remotely operated by the control information Sa, which is transmitted from the master device 2.

The electric power source 13 is the energy harvesting unit 16 that accumulates environmental energy and supplies the electric power to the controller 10. This eliminates the need to exchange a battery in the detection device 3.

The energy harvesting unit 16 is configured to convert radio waves that transmit the control information Sa output by the master device 2 into electric power and accumulate the electric power. The electric power generated and accumulated by the energy harvesting unit 16 is automatically and regularly charged by the radio waves that are regularly transmitted from the master device 2.

The detection device 3 includes the diode 27 that limits the flow of current from the electric power accumulator 26, where electric power is accumulated, to the energy harvesting unit 16. Thus, the voltage drop of the electric power accumulator 26 is minimized. This is advantageous for prolonging the time in which the voltage at the electric power accumulator 26 is maintained at a high value.

The detection device 3 includes the discharger 28 that is capable of discharging the voltage accumulated in the electric power accumulator 26. Thus, if the electric power accumulator 26 is charged when the controller 10 is switched from the standby state to the activated state, the electric power accumulator 26 is discharged by the discharger 28. This avoids situations in which electric charges remain maintained by the electric power accumulator 26 when the controller 10 operates normally.

The controller 10 compares the input voltage Vin from the detector 12 with the threshold voltage Vth to acknowledge whether the detector 12 is on or off as the state of the detector 12. Thus, a simple configuration that monitors the input voltage Vin from the detector 12 allows the switched state of the detector 12 to be detected. Further, the threshold voltage Vth at the comparator 23 is set to a value of approximately zero volts. Thus, even if the voltage at the electric power accumulator 26 is low, the input voltage Vin exceeds the threshold voltage Vth. This allows the controller 10 to acknowledge that the detector 12 is on.

It should be apparent to those skilled in the art that the present disclosure may be embodied in many other specific forms without departing from the scope of the invention. Particularly, it should be understood that the present disclosure may be embodied in the following forms.

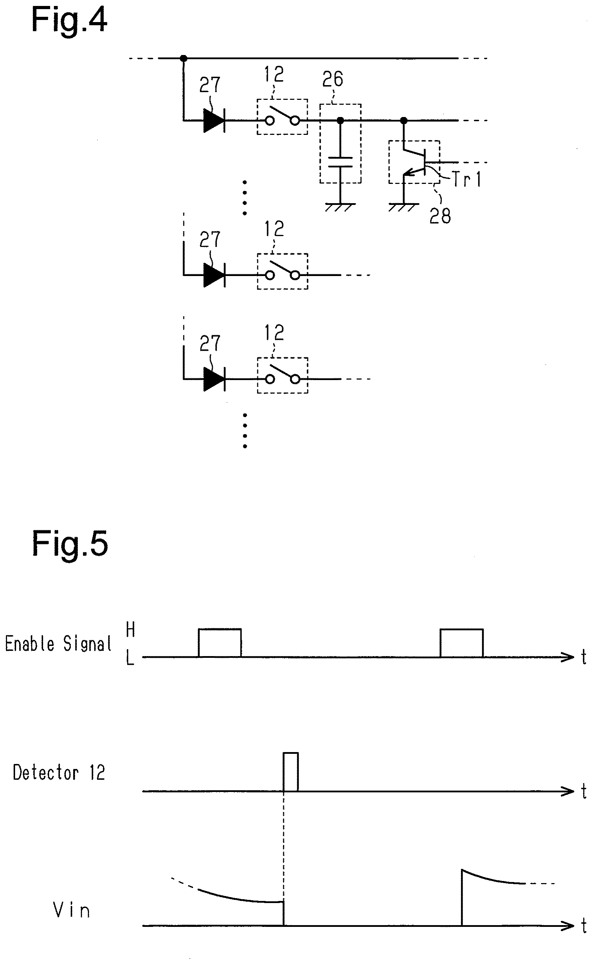

As shown in Fig. 4, the number of detectors 12 does not have to be only one and may be two or more. In such a case, sets of the detector 12, the electric power accumulator 26, the diode 27, and the discharger 28 are used.

As shown in Fig. 5, state detection can be performed by discharging the electric power accumulator 26 that has been in the electrical power accumulation state when the detector 12 performs state detection. In this manner, changes in the state of the detector 12 can be notified to the controller 10 by discharging the electric power accumulator 26 when the state of the detector 12 changes.

The capacity of the capacitor C1 does not need to be so large since electrical charges only need to be maintained while the energy harvesting unit 16 is being recharged. For example, when the energy harvesting unit 16 is charged with radio waves transmitted from the master device 2, the radio waves are regularly transmitted. This may allow the energy harvesting unit 16 to be recharged for a short time. Thus, it is assumed that the capacity of the capacitor C1 does not have to be so large.

In the embodiment, the capacitor C0 has a larger capacity than the capacitor C1. Instead, the capacitors C0 and C1 may have substantially the same capacity.

The detector 12 is not limited to a switch and may be changed to various sensors such as a sensor.

The detector 12 does not have to detect two states, namely, on and off states, and may detect the amount of movement.

The detection information Sb is not limited to on/off information of a switch. Instead, for example, when the detector 12 is a sensor, the detection information Sb may be sensor information in accordance with the amount of movement.

The master device 2 may be installed in, for example, any position of the vehicle.

The control information Sa may be information that instructs a function or an operation mode of the controller 10.

The electric power accumulator 26 is not limited to the capacitor C1. Instead, the electric power accumulator 26 may be an electric power accumulation element or an electric power accumulation circuit configured to maintain the input voltage Vin at the controller 10 at a constant value when the controller 10 is at least in the standby state.

The discharger 28 is not limited to the transistor Tr1 and may be a switch element or a switch circuit configured to discharge the electric power accumulator 26 at zero volts.

The detector 12 may detect an event or a state associated with a certain member in a vehicle instead of or in addition to an event or a state associated with a seatbelt reminder.

The electric power source 13 is not limited to the energy harvesting unit 16. Instead, the electric power source 13 may be an electric power source configured to be intermittently driven and generate electric power in order to generate and/or accumulate electric power.

The master device 2 and the detection device 3 may be configured to perform wired communication instead of or in addition to wireless communication.

The detection information transmission system 1 does not have to be used for a vehicle and may be applied to a non-vehicle device.

The present disclosure encompasses the following implementations.

[Implementation 1] A detection device configured to detect occurrence of a predetermined event or a predetermined state, the detection device including: an energy harvesting unit; a switch configured to be switched from an on state to an off state when the predetermined event or the predetermined state occurs; a capacitor connected to the energy harvesting unit via the switch and charged by the energy harvesting unit when the switch is switched to the on state; and a controller powered by the energy harvesting unit, wherein the controller is in an activated state when output voltage at the energy harvesting unit is greater than or equal to a predetermined value, and the controller is in a standby state when the output voltage at the energy harvesting unit is less than the predetermined value, wherein if the switch is switched to on state when the controller is in the activated state, the controller acknowledges a fact that the predetermined event or the predetermined state is currently occurring based on the on state of the switch, and wherein the controller acknowledges the predetermined event or the predetermined state as a past history that occurred when the controller was in the standby state based on an electric power accumulation state of the capacitor immediately after returning from the standby state to the activated state.

[Implementation 2] The detection device according to implementation 1, wherein the controller is configured to transmit a wireless signal indicating the occurrence of the predetermined event or the predetermined state via a communication circuit when the controller acknowledges the occurrence of the predetermined event or the predetermined state.

[Implementation 3] The detection device according to implementation 1 or 2, wherein the switch is arranged on a branching wire that connects the energy harvesting unit and the controller.

[Implementation 4] The detection device according to implementation 3, wherein the switch is arranged on the branching wire between the energy harvesting unit and the capacitor.

[Implementation 5] The detection device according to implementation 3 or 4, wherein the capacitor is connected to a node of the branching wire between the switch and the controller.

[Implementation 6] The detection device according to any one of implementations 3 to 5, further comprising a discharger connected to a node of the branching wire between the capacitor and the controller.

[Implementation 7] The detection device according to implementation 6, wherein the discharger includes a transistor switched by the controller between a discharge state in which the transistor discharges the capacitor and a non-discharge state in which the transistor does not discharge the capacitor.

The present examples and embodiments are to be considered as illustrative and not restrictive, and the invention is not to be limited to the details given herein, but may be modified within the scope and equivalence of the appended claims. For example, one or more of the components may be omitted from the components described in the embodiments (or one or more aspects thereof). Components in different embodiments may be appropriately combined.

A detection device (3) for use with a master device (2) is provided. The detection device (3) includes an electric power source (13) that is intermittently driven to generate electric power, a detector (12) switched between a number of states by occurrence of a predetermined event or a predetermined state, an electric power accumulator (26) that is charged or discharged by switching the state of the detector (12), and a controller (10) powered by the electric power source (13). The controller (10) is configured to determine the state of the detector (12) and notify the master device (2) of detection information (Sb) corresponding to the state of the detector (12). Activation of the controller (10) powered by the electric power source (13) is followed by acknowledgment of the state of the detector (12) by the controller (10) based on a state of the electric power accumulator (26).

## Claims

1. A detection device (3) for use with a master device (2), the detection device (3) comprising:
an electric power source (13) that is intermittently driven to generate electric power;
a detector (12) switched between a number of states by occurrence of a predetermined event or a predetermined state;
an electric power accumulator (26) that is charged or discharged by switching the state of the detector (12); and
a controller (10) powered by the electric power source (13), wherein the controller (10) is configured to determine the state of the detector (12) and notify the master device (2) of detection information (Sb) corresponding to the state of the detector (12), wherein activation of the controller (10) powered by the electric power source (13) is followed by acknowledgment of the state of the detector (12) by the controller (10) based on a state of the electric power accumulator (26).

2. The detection device (3) according to claim 1, further comprising a passive tag (11) capable of performing wireless communication with the master device (2), wherein the controller (10) transmits the detection information (Sb) to the master device (2) via the passive tag (11).

3. The detection device (3) according to claim 2, wherein the controller (10) operates in accordance with control information (Sa) written to the passive tag (11) by the master device (2) through wireless communication.

4. The detection device (3) according to any one of the preceding claims, wherein the electric power source (13) is an energy harvesting unit (16) configured to convert environmental energy into electric power, accumulate the electric power, and supply the electric power to the controller (10).

5. The detection device (3) according to claim 4, wherein the energy harvesting unit (16) is configured to convert radio waves, used to transmit the control information (Sa) output by the master device (2), into electric power and accumulate the electric power.

6. The detection device (3) according to any one of the preceding claims, further comprising a diode (27) that limits flow of current from the electric power accumulator (26) to the electric power source (13).

7. The detection device (3) according to any one of the preceding claims, further comprising a discharger (28) that discharges the electric power accumulator (26) after the controller (10) completes determination of the state of the detector (12).

8. The detection device (3) according to any one of the preceding claims, wherein
the controller (10) has a threshold voltage (Vth), and
the controller (10) compares detector voltage output from the detector (12) with the threshold voltage (Vth) to acknowledge whether the detector (12) is on or off as the state of the detector (12).

9. A detection control method used when a detection device (3) outputs detection information (Sb) to a master device (2), the detection device (3) includes an electric power source (13) that is intermittently driven to generate electric power, a detector (12) configured to switch states when detecting a predetermined event or a predetermined state, an electric power accumulator (26) charged or discharged by switching the state of the detector (12), and a controller (10) powered by the electric power source (13), wherein the controller (10) is configured to determine the state of the detector (12) and notify the master device (2) of detection information (Sb) corresponding to the state of the detector (12), the detection control method comprising:
acknowledging the state of the detector (12) based on an electric power accumulation state of the electric power accumulator (26) following activation of the controller (10) being powered by the electric power source (13).
